# EUROPEAN PATENT APPLICATION

(11) **EP 1 489 767 A1**
(43) Date of publication of application: **22.12.2004**
(21) Application number: 03710416.3
(22) Date of filing: 19.03.2003
(51) Int. Cl.: H04J 11/00

(54) **MULTI-CARRIER TRANSMISSION APPARATUS AND MULTI-CARRIER TRANSMISSION METHOD**

(30) Priority: 26.03.2002 JP 2002086156
(71) Applicant: MATSUSHITA ELECTRIC INDUSTRIAL CO., LTD., Kadoma-shi, Osaka 571-8501 (JP)
(72) Inventor: SUMASU, Atsushi, Yokosuka-shi, Kanagawa 238-0013 (JP); FUTAGI, Sadaki, Ishikawa-gun, Ishikawa 929-0224 (JP)
(74) Representative: Grünecker, Kinkeldey, Stockmair & Schwanhäusser Anwaltssozietät
(86) International application number: PCT/JP2003/003292
(87) International publication number: WO 2003/081821

(57) **Abstract**

Transmission digital data is converted to N parallel data sequences by an S/P converting section (103) via an error correction coding section (101) and a digital modulating section (102). A subcarrier selecting section (104) selects M parallel data sequences thereamong. The selected data sequences are converted to an OFDM signal via an IFFT section (105-1) and a P/S converting section (106-1) and a peak is detected by a peak detecting section (107). A signal output to an IFFT section (105-2) is also processed in the similar way to detect a peak. A signal selecting section (108) selects one of OFDM signals based on information reported from the peak detecting section (107) and outputs it. The signal is transmitted via a RF transmitting section (109) and an antenna (110). This enables to control a peak power of a multicarrier signal and suppress deterioration in an error rate at a receiving time and interference with a signal of another system.

## Description

### Technical Field

The present invention relates to a multicarrier transmission apparatus and multicarrier transmission method.

### Background Art

In conventional, one of transmission apparatuses using a multicarrier transmission system (multicarrier transmission apparatus) is described in Unexamined Japanese Patent Publication No. 7-143098.

This conventional transmission converts serial digital data to parallel data (digital symbol) to perform an inverse fast Fourier transform, thereby superimposing the resultant on subcarriers each having a different phase to output transmission OFDM (Orthogonal Frequency Division Multiplex) symbol signals that continue in a time series.

However, in the conventional multicarrier transmission apparatus, superimposition of the respective subcarriers generates an extremely high peak voltage to an average power to cut a peak portion of a signal according to an upper limit gain of an amplifier, thereby causing a problem in which spurious radiation occurs inside the band and outside thereof to degrade the characteristic of the apparatus and cause interference with another system adjacent thereto on a frequency.

In order to prevent this problem, when a large-size amplifier is used, the entire size of the apparatus is enlarged, thereby resulting in an increase in the manufacturing cost of the apparatus, power consumption, and a heating value.

Moreover, Unexamined Japanese Patent Publication No. 7-143098 describes a method for setting an upper limit value of voltage to simply cut (peak clip) voltage exceeding the upper limit value.

However, only cutting the peak voltage distorts a signal and increases a bandwidth, causing a problem in which an error rate (transmission characteristic) at a receiving time deteriorates and spurious radiation increases inside the band and outside thereof to cause interference with another system adjacent thereto on a frequency axis.

### Disclosure of Invention

An object of the present invention is to control a peak power of a multicarrier signal and suppress deterioration in an error rate at a receiving time and interference with a signal of another system.

The above object can be attained by a multicarrier transmission apparatus, which selects a part of subcarriers to perform multicarrier transmission and takes measures to reduce an influence of data loss caused by reducing the number of subcarriers when all subcarriers are multicarrier transmitted, with the result that a peak occurs.

As measures against the data loss, the following four methods can be roughly considered. A first method is one in which error correction coding is provided to transmission data in advance, a second method is one in which MC-CDMA (Multi Carrier - Code Division Multiple Access) is provided to transmission data in advance, a third method is one in which MC/DS-CDMA (Multi Carrier/Direct Sequence - Code Division Multiple Access) is provided to transmission data in advance, and a fourth method is one in which subcarriers are interleaved to change an interleave pattern at a retransmitting time.

### Brief Description of Drawings

FIG. 1 is a block diagram illustrating one example of a configuration of a multicarrier transmission apparatus according to Embodiment 1 of the present invention;
FIG. 2 is a block diagram illustrating one example of a configuration of a receiving apparatus that receives a signal transmitted from a transmission apparatus according to Embodiment 1 of the present invention;
FIG. 3 is a block diagram illustrating one example of a configuration of a multicarrier transmission apparatus according to Embodiment 1 of the present invention;
FIG. 4 is a block diagram illustrating one example of a configuration of a multicarrier transmission apparatus according to Embodiment 2 of the present invention;
FIG. 5 is a block diagram illustrating one example of a configuration of a multicarrier transmission apparatus according to Embodiment 3 of the present invention;
FIG. 6 is a block diagram illustrating one example of a configuration of a receiving apparatus that receives a signal transmitted from a transmission apparatus according to Embodiment 3 of the present invention;
FIG. 7 is a block diagram illustrating one example of a configuration of a multicarrier transmission apparatus according to Embodiment 4 of the present invention;
FIG. 8 is a block diagram illustrating one example of a configuration of a receiving apparatus that receives a signal transmitted from a transmission apparatus according to Embodiment 4 of the present invention;
FIG. 9 is a block diagram illustrating one example of a configuration of a multicarrier transmission apparatus according to Embodiment 5 of the present invention; and
FIG. 10 is a block diagram illustrating one example of a configuration of a receiving apparatus that receives a signal transmitted from a transmission apparatus according to Embodiment 5 of the present invention.

### Best Mode for Carrying Out the Invention

The following will specifically explain Embodiments of the present invention with reference to the accompanying drawings.

### (Embodiment 1)

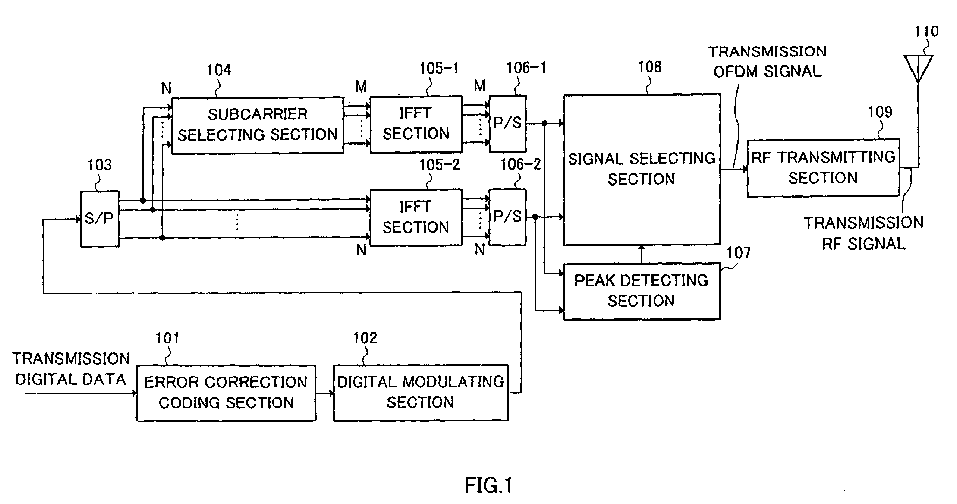

FIG. 1 is a block diagram illustrating one example of a configuration of a multicarrier transmission apparatus according to Embodiment 1 of the present invention. Here, an explanation will be given using an example of a case in which error codes are incorporated into a transmission apparatus using an OFDM communication system.

An OFDM transmission apparatus illustrated in FIG. 1 includes an error correction coding section 101, a digital modulating section 102, a serial/parallel converting (S/P) section 103, a subcarrier selecting section 104, inverse fast Fourier transforming (IFFT) sections 105-1, 105-2, parallel/serial (P/S) converting sections 106-1, 106-2, a peak detecting section 107, a signal selecting section 108, an RF (Radio Frequency) transmitting section 109, and an antenna 110.

The error correction coding section 101 error correction codes transmission digital data and thereafter outputs it to the digital modulating section 102. The digital modulating section 102 digitally modulates an output of the error correction coding section 101 according to BPSK (Binary Phase Shift Keying), a modulation system such as 16QAM (Quadrature Amplitude Modulation) and the like, and outputs it to the S/P converting section 103. The S/P converting section 103 converts an output signal (digital symbol), which is a serial data sequence, of the digital converting section 102 to N parallel data sequences, and outputs them to the IFFT section 105-2 and the subcarrier selecting section 104.

The subcarrier selecting section 104 selects M parallel data sequences on which important data is to be superimposed from among N parallel data sequences output from the S/P converting section 103, and outputs them to the IFFT section 105-1. Here, the M parallel data sequences on which important data is to be superimposed are predetermined. The IFFT section 105-1 transforms an output of the subcarrier selecting section 104 to each sample value in a time waveform of an OFDM signal, and outputs it to the P/S converting section 106-1. Similarly, the IFFT section 105-2 transforms an output of the S/P converting section 103 to each sample value in a time waveform of an OFDM signal, and outputs it to the P/S converting section 106-2. The P/S converting sections 106-1 and 106-2 convert parallel data sequences, which correspond to the respective sample values in the time waveforms of OFDM signals output from the IFFT sections 105-1 and 105-2, to serial data sequences respectively, to generate an OFDM signal.

The peak detecting section 107 detects peaks of the OFDM signals output from the P/S converting sections 106-1 and 106-2 and reports them to the signal selecting section 108. The signal selecting section 108 selects one of OFDM signals output from the P/S converting sections 106-1 and 106-2 based on reported information from the peak detecting section 107 by a method to be described later, and outputs it to the RF transmitting section 109. The RF transmitting section 109 performs a predetermined radio processing such as amplification, upconversion and the like to an OFDM signal output from the signal selecting section 108, and transmits it from the antenna 110.

An explanation will next be given of an actual operation of each of the peak detecting section 107 and the signal selecting section 108.

The peak detecting section 107 detects a power peak, which is higher than a preset threshold value, from the OFDM signal output from each of the P/S converting sections 106-1 and 106-2, and reports it to the signal selecting section 108.

When no power peak, which is higher than a preset threshold value, is detected based on information reported from the peak detecting section 107, the signal detecting section 108 selects an output of the P/S converting section 106-2, namely, an OFDM signal formed of all N subcarrier signals, and outputs it to the RF transmitting section 109, and when a power peak, which is higher than a preset threshold value, is detected from only the output of the P/S converting section 106-2, the signal detecting section 108 selects an output of the P/S converting section 106-1, namely, an OFDM signal formed of a part of subcarrier signals, and outputs it to the RF transmitting section 109.

Here, the threshold value is set to a value, which is a little lower than a peak value to be subjected to peak clipping or peak suppression.

The aforementioned configuration enables to perform such a selection that an OFDM signal formed of all N subcarrier signals is transmitted when there is no peak to be subjected to peak clipping or peak suppression, and that an OFDM signal formed of a part of subcarrier signals is transmitted when there is a peak to be subjected to peak clipping or peak suppression.

Generally, even when a peak to be subjected to peak clipping or peak suppression appears in an OFDM signal formed of all N subcarrier signals, since the size of the peak is based on contribution of N subcarriers, a suitable value is selected as a selection number M by the subcarrier selecting section 104 to reduce the number of using subcarriers to M, thereby enabling to expect that the size of the peak will be reduced to an allowable size. Namely, according to the aforementioned configuration, since the peak power of the multicarrier signal is controlled in accordance with the circumstances, it is possible to prevent occurrence of spurious radiation inside the band and outside thereof due to cutting of the peak portion, and suppress interference with the signal of another system.

Additionally, in both the OFDM signal formed of all N subcarrier signals and the OFDM signal formed of a part of subcarrier signals, a case may be assumed where a peak that is higher than the threshold value is detected. However, in this case, an OFDM signal having the smaller number of the relevant peaks may be selected.

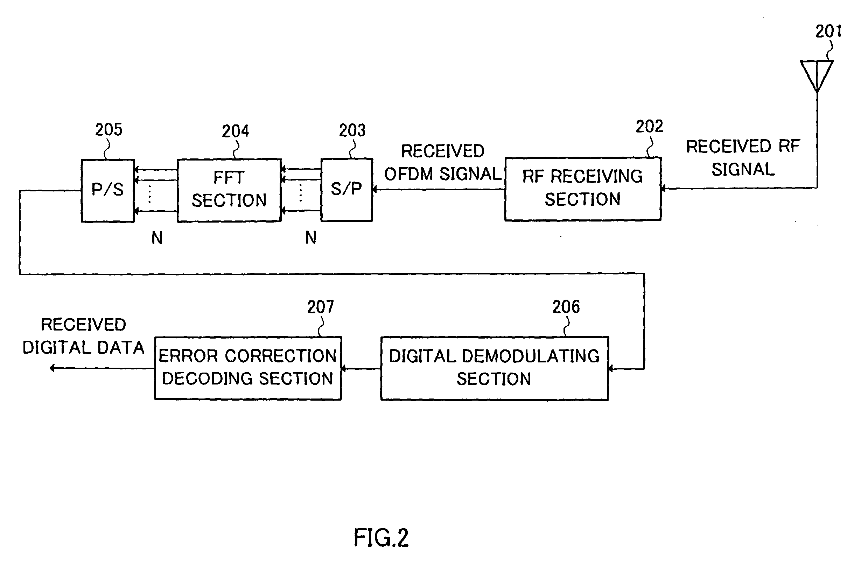

FIG. 2 is a block diagram illustrating one example of a configuration of a receiving apparatus that receives a signal transmitted from a transmission apparatus according to this embodiment.

The receiving apparatus illustrated in FIG. 2 includes an antenna 201, an RF receiving section 202, an S/P converting section 203, a fast Fourier transforming (FFT) section 204, a P/S section 205, a digital demodulating section 206, and an error correction decoding section 207.

A signal received by the antenna 201 is subjected to a predetermined radio processing such as downconversion and the like by the RF receiving section 202, the radio processed resultant is converted to a multicarrier form by the S/P converting section 203, the converted resultant is subjected to a Fourier transform by the FFT section 204, the transformed resultant is converted to a serial data sequence by the P/S section 205, the converted resultant is demodulated by the digital demodulating section 206, and the demodulated resultant is subjected to error correction decoding by the error correction decoding section 207.

Regarding the influence of data loss generated by reducing the number of using subcarriers, since transmission data is error correction coded by the error correction coding section 101 in the transmission apparatus illustrated in FIG. 1, an error correction is performed by the error correction decoding section 207 on the receiving apparatus side, thereby enabling to reduce the influence of data loss to a level where no problem occurs.

Moreover, on the receiving apparatus side, received data can be demodulated no matter what method is used to perform multicarrier transmission. Accordingly, there is an advantage that there is no need to add a change up to the receiving apparatus even if the configuration of the transmission apparatus is changed by version up and the like.

Thus, according to this embodiment, multicarrier transmission is performed using a part of the subcarriers of the multicarrier to perform error correction, thereby reducing the influence of data loss generated by reducing the number of using subcarriers. This enables to control the peak power of the multicarrier signal and suppress deterioration in an error rate at a receiving time and interference with a signal of another system.

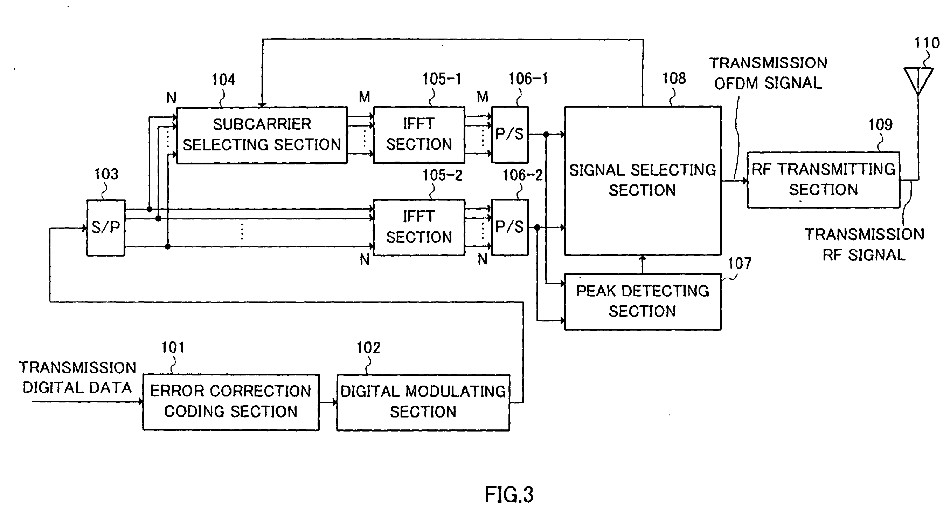

Additionally, here, the explanation was given using an example of a case in which the number of data sequences M selected by the subcarrier selecting section 104 was fixed. However, as illustrated in FIG. 3, under a such circumstance that an OFDM signal formed of a part of subcarrier signals is selected, M may be adaptively changed according to the size of the peak of the signal detected by the peak detecting section 107, for example, M is increased when the size of the peak is considerably smaller than the threshold value. This makes it possible to prevent the number of subcarriers from being reduced more than necessary and minimize the influence of data loss.

### (Embodiment 2)

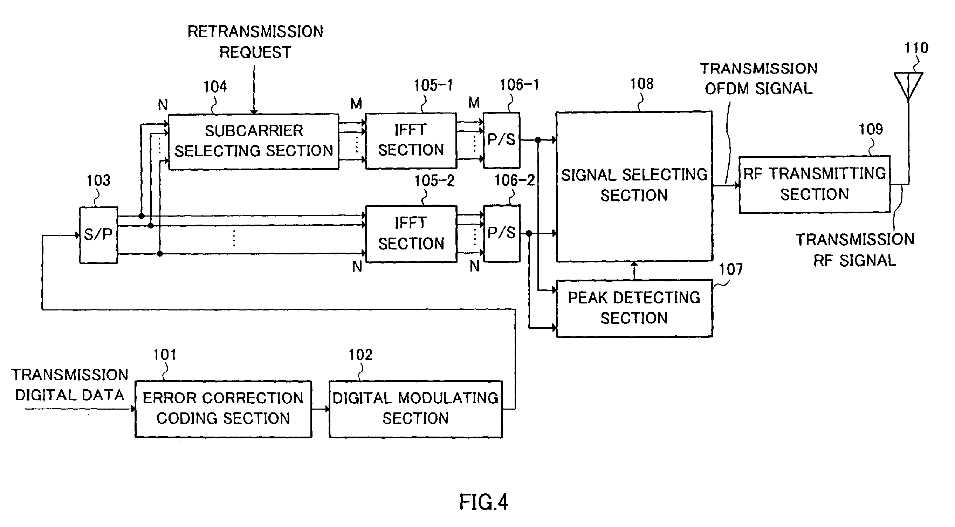

FIG. 4 is a block diagram illustrating one example of a configuration of a multicarrier transmission apparatus according to Embodiment 2 of the present invention. Additionally, this multicarrier transmission apparatus has the same basic configuration as that of the multicarrier transmission apparatus shown in FIG. 1 and parts in FIG. 4 identical to those in FIG. 1 are assigned the same reference numerals as in FIG. 1 and their detailed explanations are omitted.

The characteristic of this embodiment is that the subcarrier selecting section 104 shown in FIG. 1 changes subcarriers to be selected according to a repeat request from the receiving apparatus.

As mentioned above, the number of subcarriers is reduced to M by the subcarrier selecting section 104, with the result that the loss of transmission data is generated. The receiving apparatus sends a repeat request to the transmission apparatus to perform retransmission. There can be considered a case in which when the transmission apparatus selects the same number of subcarriers M as that of the previous time according to the repeat request and transmits them, reliability of the transmission signal is not improved.

For this reason, according to this embodiment, in order to further reduce the influence of the data loss, the number of subcarriers M, which is different from that of the previous time, is selected according to the repeat request from the receiving apparatus such that data lost at a first transmitting time is surely transmitted at a retransmitting time.

For example, in conjunction with a system such as an H-ARQ (Hybrid-Automatic Repeat Request) that improves reception performance by combining a plurality of retransmitted signals, the number of subcarriers M, which is different from that of the previous time, is transmitted at a retransmitting time, with the result that an amount of information in the combined case is increased and a great improvement in the reception performance is expected.

Additionally, the above explanation was given using the example of the case in which the transmission apparatus selected the same number of subcarriers M as that of the previous time according to the repeat request from the receiving apparatus. However, a configuration that decides subcarriers, which are selected according to the number of retransmissions, may be possible.

### (Embodiment 3)

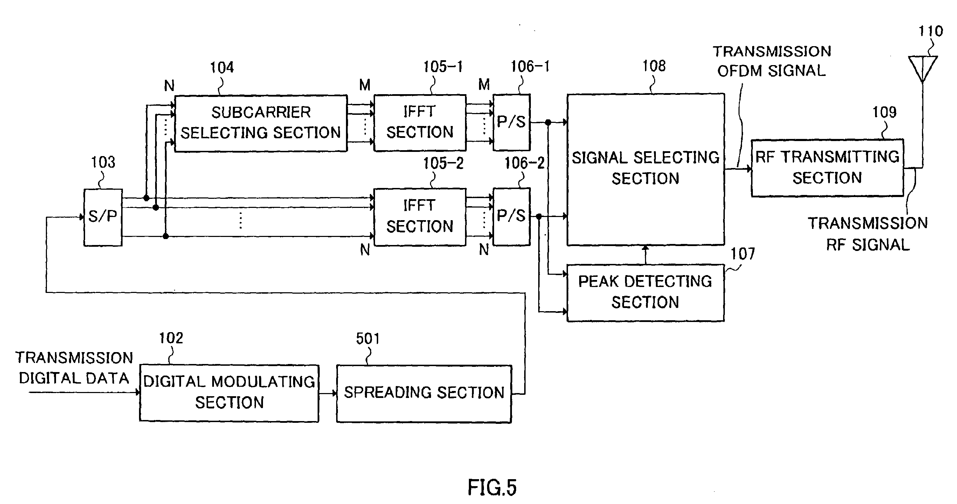

FIG. 5 is a block diagram illustrating one example of a configuration of a multicarrier transmission apparatus according to Embodiment 3 of the present invention. Here, an explanation will be given using an example of a case in which a frequency domain spread modulation (MC-CDMA) system is employed in a transmission apparatus using an OFDM communication system. Additionally, this multicarrier transmission apparatus has the same basic configuration as that of the multicarrier transmission apparatus shown in FIG. 1 and parts in FIG. 5 identical to those in FIG. 1 are assigned the same reference numerals as in FIG. 1 and their detailed explanations are omitted.

The characteristic of this embodiment is that a spreading section 501 is provided in place of the error correction coding section 101 illustrated in FIG.1.

The spreading section 501 performs frequency domain spread modulation to transmission digital data digitally modulated by the digital modulating section 102. The spread modulated signal is output to the S/P converting section 103 and processed in the same way as the multicarrier transmission apparatus shown in FIG. 1 and transmitted.

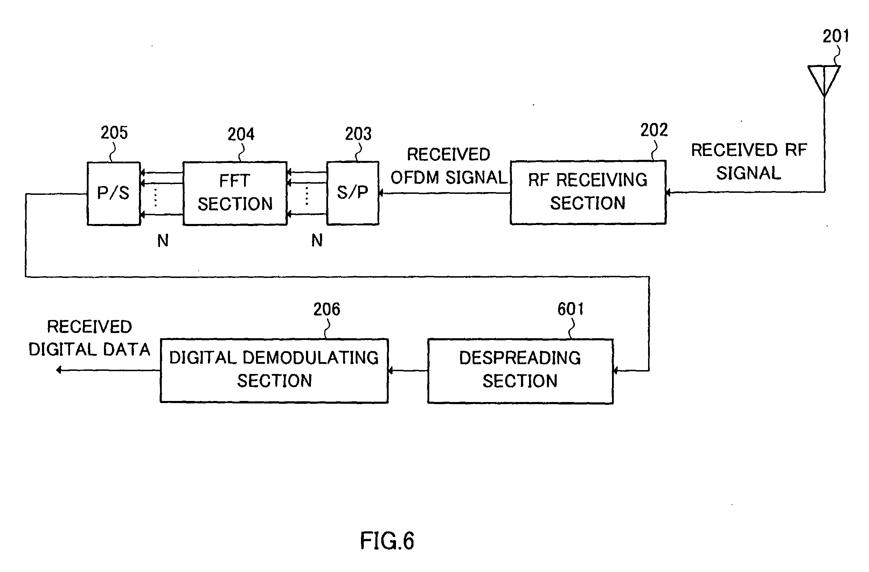

FIG. 6 is a block diagram illustrating one example of a configuration of a receiving apparatus that receives a signal transmitted from a transmission apparatus according to this embodiment. Additionally, this receiving apparatus has the same basic configuration as that of the receiving apparatus shown in FIG. 2 and parts in FIG. 6 identical to those in FIG. 2 are assigned the same reference numerals as in FIG. 2 and their detailed explanations are omitted.

The receiving apparatus illustrated in FIG. 6 has a despreading section 601 and receives transmission data subjected to spread modulation by the spreading section 501 illustrated in FIG. 5, and despreads it.

By the aforementioned configuration, one bit transmission data is spread modulated to several tens to several hundreds chip signals and each is located at a different subcarrier. Accordingly, even if data is lost by reducing the number of using subcarriers to M, all of one bit transmission data are not lost but received data can be restored by a spread gain. In other words, the influence of data loss can be reduced to allow maintenance of reception quality.

Additionally, the above explanation was given using the example of the case in which the error correction coding section 101 shown in FIG. 1 was not provided. However, the error correction coding section may be further provided before the digital modulating section 102. This makes it possible to further reduce the influence of data loss generated by reducing the number of using subcarriers to M.

Moreover, the above explanation was given using the example of the case in which transmission data was subjected to frequency domain spread modulation. However, by use of the same configuration, frequency spread modulation is performed by the spreading section 501 and the subcarriers are relocated on a time axis by the S/P converting section 103, thereby enabling to perform spread modulation to the subcarriers two-dimensionally.

### (Embodiment 4)

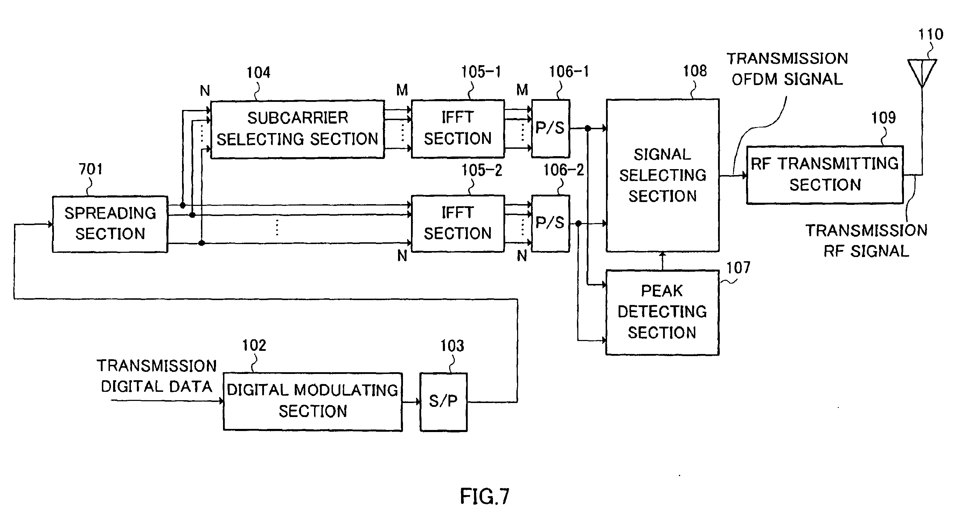

FIG. 7 is a block diagram illustrating one example of a configuration of a multicarrier transmission apparatus according to Embodiment 4 of the present invention. Here, an explanation will be given using an example of a case in which a time domain spread modulation (MC/DS-CDMA) system is employed in a transmission apparatus using an OFDM communication system. Additionally, this multicarrier transmission apparatus has the same basic configuration as that of the multicarrier transmission apparatus shown in FIG. 1 and parts in FIG. 7 identical to those in FIG. 1 are assigned the same reference numerals as in FIG. 1 and their detailed explanations are omitted.

The characteristic of this embodiment is that a spreading section 701 is provided in place of the error correction coding section 101 illustrated in FIG.1.

The spreading section 701 performs time domain spread modulation to transmission digital data parallelized into N subcarriers by the S/P converting section 103, and outputs it to the subcarrier selecting section 104 and the IFFT section 105-2. The signals output to the subcarrier selecting section 104 and the IFFT section 105-2 are processed in the same way as the multicarrier transmission apparatus shown in FIG. 1 and transmitted.

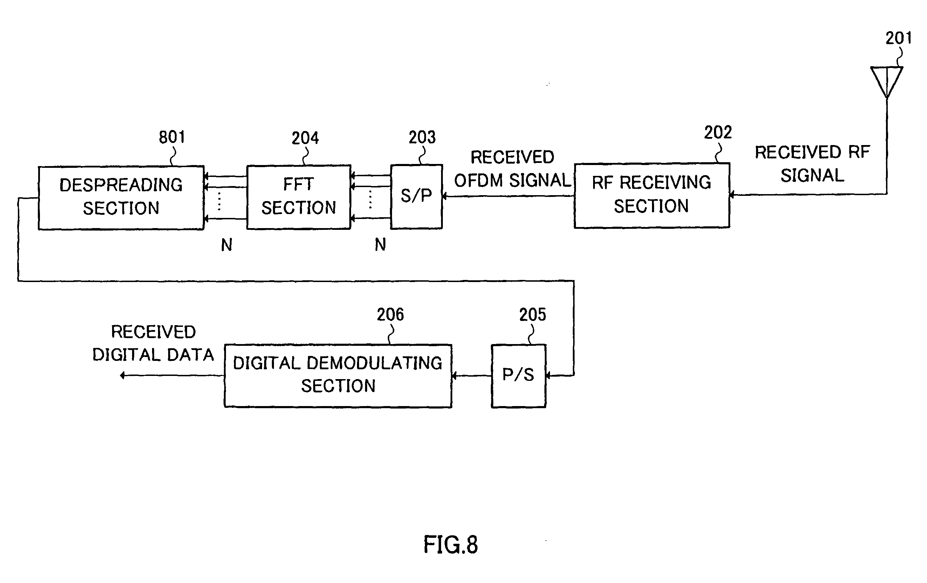

FIG. 8 is a block diagram illustrating one example of a configuration of a receiving apparatus that receives a signal transmitted from a transmission apparatus according to this embodiment. Additionally, this receiving apparatus has the same basic configuration as that of the receiving apparatus shown in FIG. 2 and parts in FIG. 8 identical to those in FIG. 2 are assigned the same reference numerals as in FIG. 2 and their detailed explanations are omitted.

The receiving apparatus illustrated in FIG. 8 has a despreading section 801 and receives transmission data subjected to spread modulation by the spreading section 701 illustrated in FIG. 7, and despreads it.

By the aforementioned configuration, one bit transmission data is spread modulated to several tens to several hundreds chip signals and each is located at a different subcarrier. Accordingly, even if data is lost by reducing the number of using subcarriers to M, all of one bit transmission data are not lost but the influence of data loss can be reduced, thereby allowing maintenance of reception quality.

Additionally, the above explanation was given using the example of the case in which the error correction coding section 101 shown in FIG. 1 was not provided. However, the error correction coding section may be further provided before the digital modulating section 102. This makes it possible to further reduce the influence of data loss generated by reducing the number of using subcarriers to M.

### (Embodiment 5)

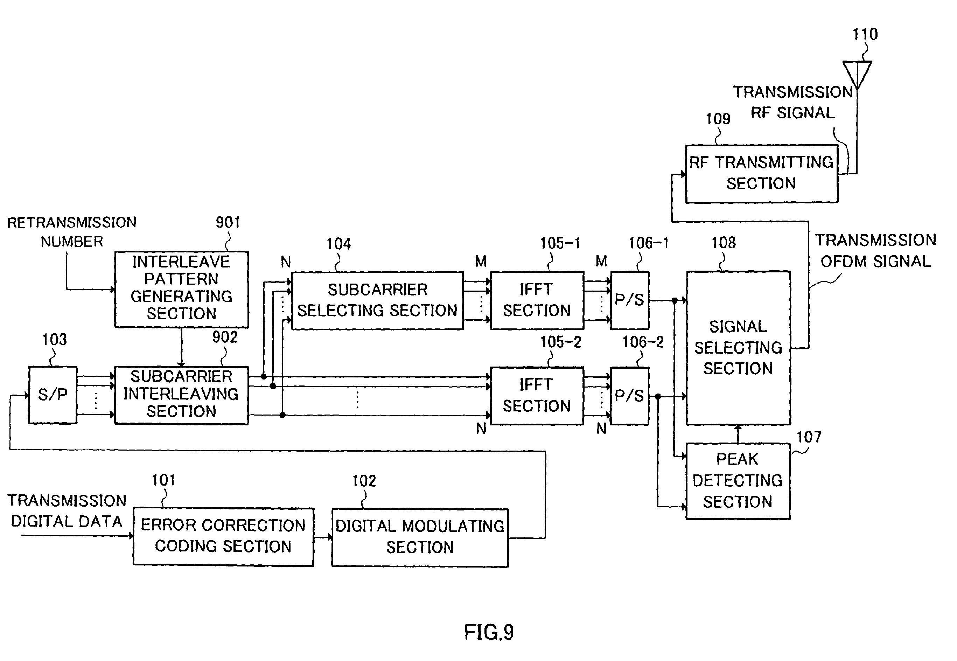

FIG. 9 is a block diagram illustrating one example of a configuration of a multicarrier transmission apparatus according to Embodiment 5 of the present invention. Here, an explanation will be given using an example of a case in subcarrier interleave is performed to subcarriers of the transmission apparatus using an OFDM communication system and an interleave pattern is changed at a retransmitting time. Additionally, this multicarrier transmission apparatus has the same basic configuration as that of the multicarrier transmission apparatus shown in FIG. 1 and parts in FIG. 9 identical to those in FIG. 1 are assigned the same reference numerals as in FIG. 1 and their detailed explanations are omitted.

The characteristic of this embodiment is that an interleave pattern generating section 901 and a subcarrier interleaving section 902 are provided.

The subcarrier interleaving section 902 interleaves subcarriers output from the S/P converting section 103 and outputs them to the subcarrier selecting section 104 and the IFFT section 105-2. The signals input to the subcarrier selecting section 104 and the IFFT section 105-2 are processed in the same way as the multicarrier transmission apparatus shown in FIG. 1 and transmitted. The interleave pattern generating section 901 generates an interleave pattern to be used in the subcarrier interleaving section 902. The interleave pattern is changed according to the number of retransmissions.

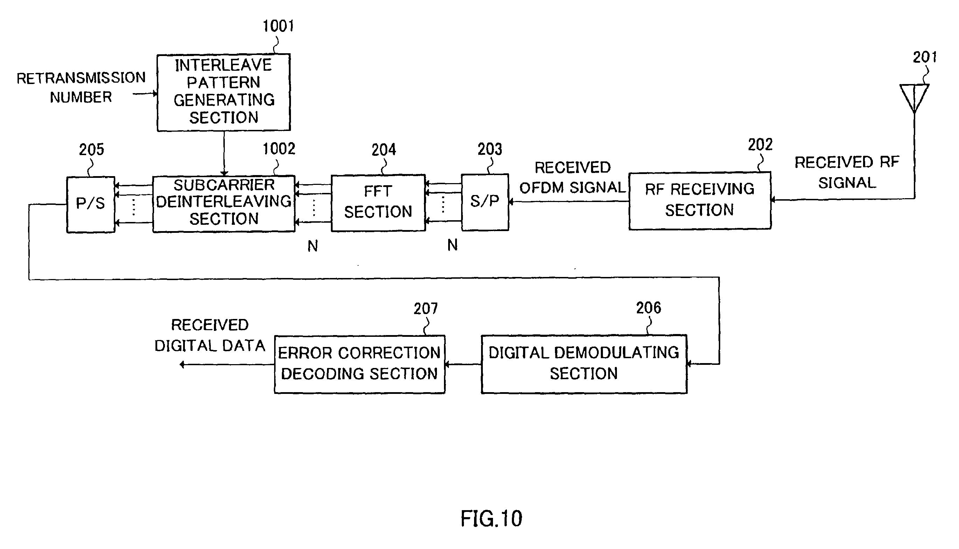

FIG. 10 is a block diagram illustrating one example of a configuration of a receiving apparatus that receives a signal transmitted from a transmission apparatus according to this embodiment. Additionally, this receiving apparatus has the same basic configuration as that of the receiving apparatus shown in FIG. 2 and parts in FIG. 10 identical to those in FIG. 2 are assigned the same reference numerals as in FIG. 2 and their detailed explanations are omitted.

The transmission apparatus shown in FIG. 10 has an interleave pattern generating section 1001 and a subcarrier deinterleaving section 1002. The interleave pattern generating section 1001 generates the same interleave pattern as that of the interleave pattern shown in FIG. 9 according to the number of retransmissions and outputs it to the subcarrier deinterleaving section 1002. The subcarrier deinterleaving section 1002 deinterleaves transmission data interleaved by the subcarrier interleaving section 902 shown in FIG. 9.

By the aforementioned configuration, the signal employing the interleaved subcarriers of transmission data is transmitted, and when a repeat request is sent from the receiving apparatus, the interleave pattern is changed and transmitted according to the number of retransmissions.

Accordingly, since different data is transmitted for each retransmission, the influence of data loss generated by reducing the number of using subcarriers to M can be reduced to make it possible to improve reception performance.

For example, in conjunction with a system such as an H-ARQ that improves reception performance by combining a plurality of retransmitted signals, the number of subcarriers M, which is different from that of the previous time, is transmitted at a retransmitting time, with the result that an amount of information in the combined case is doubled and a great improvement in the reception performance is expected.

As explained above, according to the present invention, it is possible to control a peak power of a multicarrier signal and suppress deterioration in an error rate at a receiving time and interference with a signal of another system.

This application is based on the Japanese Patent Application No. 2002-086156 filed on March 26, 2002, entire content of which is expressly incorporated by reference herein.

### Industrial Applicability

The present invention can be applied to a multicarrier transmission apparatus installed in a base station of a mobile communication system.

## Claims

1. A multicarrier transmission apparatus comprising:
parallelizing means for parallelizing transmission data into a plurality of parallel data sequences; and
first selecting means for selecting a part of data sequences from among the plurality of parallel data sequences parallelized by said parallelizing means,
wherein the apparatus performs multicarrier transmission using the data sequences selected by said first selecting means.

2. The multicarrier transmission apparatus according to claim 1, comprising:
detecting means for detecting amplitude of a signal in which the plurality of data sequences parallelized by said parallelizing means is serially converted; and
second selecting means for selecting a signal in which data sequences selected by said first selecting means are serially converted when amplitude of the signal in which the plurality of data sequences parallelized by said parallelizing means is serially converted is higher than a threshold value, and selecting a signal in which the plurality of data sequences parallelized by said parallelizing means is serially converted when amplitude of the signal in which the plurality of data sequences parallelized by said parallelizing means is serially converted is lower than the threshold value.

3. A multicarrier transmission apparatus comprising:
parallelizing means for parallelizing transmission data into a plurality of parallel data sequences;
first selecting means for selecting a part of data sequences from among the plurality of parallel data sequences parallelized by said parallelizing means;
first transforming means for inversely orthogonally transforming the data sequences selected by said first selecting means;
first serializing means for serializing the plurality of data sequences inversely orthogonally transformed by said first transforming means to serial data sequences;
second transforming means for inversely orthogonally transforming all of the plurality of data sequences parallelized by said parallelizing means;
second serializing means for serializing the plurality of data sequences inversely orthogonally transformed by said second transforming means to serial data sequences;
detecting means for detecting amplitude of a signal output from said second serializing means; and
second selecting means for outputting a signal output from said first serializing means when amplitude detected by said detecting means is higher than a threshold value, and selecting a signal output from said second serializing means when amplitude detected by said detecting means is lower than the threshold value.

4. The multicarrier transmission apparatus according to claim 2,
wherein said first selecting means changes the number of selecting data sequences among the plurality of data sequences parallelized by said parallelizing means according to amplitude of the signal detected by said detecting means.

5. The multicarrier transmission apparatus according to claim 1, comprising:
coding means for error correction coding the transmission data in advance,
wherein said parallelizing means parallelizes the transmission data error correction coded by said coding means into a plurality of parallel data sequences.

6. The multicarrier transmission apparatus according to claim 1,
wherein said first selecting means selects a part of the data sequences different from the previous time from among the plurality of data sequences parallelized by said parallelizing means when a repeat request is sent.

7. The multicarrier transmission apparatus according to claim 1, comprising:
spreading means for spread modulating the transmission data in advance,
wherein said parallelizing means parallelizes the data spread by said spreading means into a plurality of parallel data sequences.

8. The multicarrier transmission apparatus according to claim 1, comprising spreading means for spreading the parallel data sequences parallelized by said parallelizing means.

9. The multicarrier transmission apparatus according to claim 1, comprising:
generating means for generating an interleave pattern according to the number of retransmissions; and
interleaving means for interleaving parallel data sequences parallelized using the interleave pattern generated by said generating means.

10. The multicarrier transmission apparatus according to claim 3, wherein the orthogonal transform is a Fourier transform.

11. A communication terminal apparatus comprising the multicarrier transmission apparatus described in claim 1.

12. A base station apparatus comprising the multicarrier transmission apparatus described in claim 1.

13. A multicarrier transmission method comprising:
a parallelizing step of parallelizing transmission data into a plurality of parallel data sequences;
a first selecting step of selecting a part of data sequences from among the plurality of parallel data sequences parallelized by said parallelizing step;
a detecting step of detecting amplitude of a signal in which the plurality of data sequences parallelized by said parallelizing means is serially converted; and
a second selecting step of selecting a signal in which the data sequences selected by said first selecting step are serially converted when amplitude of the signal in which the plurality of data sequences parallelized by said parallelizing step is serially converted is higher than a threshold value, and selecting a signal in which the plurality of data sequences parallelized by said parallelizing step is serially converted when amplitude of the signal in which the plurality of data sequences parallelized by said parallelizing step is serially converted is lower than the threshold value.
